# EUROPÄISCHE PATENTSCHRIFT

(11) **EP 3 753 233 B1**
(45) Veröffentlichungstag und Bekanntmachung des Hinweises auf die Patenterteilung: **30.03.2022**
(21) Anmeldenummer: 19707307.5
(22) Anmeldetag: 15.02.2019
(51) Int. Cl.: H04L 29/08

(54) **VERFAHREN ZUM EREIGNISGESTEUERTEN ABRUF VON PROZESSDATEN**
METHOD FOR THE EVENT-CONTROLLED RETRIEVAL OF PROCESS DATA
PROCÉDURE D'INTERROGATION, COMMANDÉE PAR ÉVÉNEMENT, DE DONNÉES DE PROCESSUS

(30) Priorität: 26.03.2018 DE 102018204558
(43) Veröffentlichungstag der Anmeldung: 23.12.2020
(73) Patentinhaber: Siemens Aktiengesellschaft, 80333 München (DE)
(72) Erfinder: HOHL, Hubertus, 82008 Unterhaching (DE); SAUER, Markus, 81739 München (DE)
(86) Internationale Anmeldenummer: PCT/EP2019/053834
(87) Internationale Veröffentlichungsnummer: WO 2019/185238

(56) Entgegenhaltungen:
- WO-A1-2018/033293
- GB-A- 2 354 848

## Beschreibung

Die Erfindung betrifft ein Verfahren zum ereignisgesteuerten Abruf von Prozessdaten, insbesondere zum Abruf von Prozessdaten unter Verwendung eines für einen Publikations- / Abonnementdienst eingerichteten Nachrichtenmaklers.

Die vorliegende Offenbarung betrifft allgemein einen Abruf von Prozessdaten in Prozessanlagen und Prozessleitsystemen, beispielsweise zur Echtzeit-Leistungsüberwachung und Analytik von Echtzeitdaten, die von Prozessanlagen und Prozessleitsystemen generiert werden. Ein derartiger Abruf von Prozessdaten kommt beispielsweise im Bereich der industriellen Automatisierungstechnik, bei Produktions- oder Werkzeugmaschinen, bei Diagnose- oder Serviceunterstützungssystemen sowie bei einer Bedienung und Wartung komplexer Komponenten, Geräte und Systeme, insbesondere industrieller oder medizinischer Anlagen zum Einsatz.

Gegenwärtige industrielle Arbeitsumgebungen sind durch eine dezentrale Datenhaltung in unterschiedlichen, verteilten Systemkomponenten, insbesondere in sogenannten Cloud Systemen oder Edge Computing Systemen gekennzeichnet. Typischerweise übertragen datenproduzierende Systemkomponenten - z.B. Feldgeräte - ihre Prozessdaten an Datenbereitstellungskomponenten, welche zur Speicherung und zum späteren Abruf von Daten vorgesehen sind. Zu diesen Datenbereitstellungskomponenten zählen dezentrale Datenbanken, auf welche in der Fachwelt auch als eine Cloud Datenbank oder Edge Datenbank Bezug genommen wird.

Gleichzeitig werden Datenabrufkomponenten, z.B. zur Analyse der Prozessdaten, eingesetzt, welche Prozessdaten von einzelnen spezifischen Datenbereitstellungskomponenten abrufen und auswerten.

Eine derartige Verteilung zwischen Datenbereitstellungskomponenten zur dezentralen Speicherung von Prozessdaten sowie Datenabrufkomponenten zum dezentralen Zugriff auf Prozessdaten hat aufgrund ihrer Vorteile - bezüglich Ausfallsicherheit, Skalierbarkeit etc. - in modernen industriellen Arbeitsumgebungen bereits weite Verbreitung erfahren. Allerdings treten auch zahlreiche Nachteile dieser derzeit praktizierten verteilten Prozessdatenhaltung hervor.

Mit einer fortschreitenden Entwicklungsgeschwindigkeit einzelner Systemkomponenten kann eine Planung und Integration dieser Systemkomponenten nicht mehr auf Basis der aktuellen, bekannten Implementierung einzelner Systemkomponenten bewerkstelligt werden, zumal auch ein wachsender Funktionsumfang einzelner Systemkomponenten deren Integration und Zusammenarbeit erschwert. Gerade in einem auch als »Industry 4.0« avisierten Szenario mit dynamischen Peer-to-Peer-Szenarien zwischen Systemkomponenten stoßen bekannte Mechanismen an ihre Grenzen.

Ein zunehmendes Problem derzeit eingesetzter Verfahren zum Abruf von Prozessdaten besteht darin, dass seitens der Datenabrufkomponente oftmals ein vielfacher Abruf mehrerer getrennter - und unkoordinierter - Datenbereitstellungskomponenten erforderlich ist. Eine einzelne Abfrage zum Abruf getrennt gehaltener Prozessdaten von unterschiedlichen Datenbereitstellungskomponenten ist derzeit nicht möglich. Es müssen stattdessen separate Abfragen gestellt und mehrfache Antworten auf die einzelnen Abfragen zusammengeführt werden.

Weiterhin nachteilig ist eine derzeitige Einschränkung, dass eine Initiative zur Datenabfrage von der Datenabrufkomponente ausgehen muss und nicht etwa durch ein bestimmtes Ereignis - etwa einem Vorliegen eines bestimmten Werts in einem Prozessdatum oder einer Veränderung in bestimmten Prozessdaten - auszulösen ist.

Schließlich sind derzeitige Verfahren zum Abruf von Prozessdaten durch die Tatsache eingeschränkt, dass in der Datenabrufkomponente eine jeweilige Abfrageschnittstelle - Query Application Programming Interface bzw. Query API - jeder abgefragten Datenbereitstellungskomponente implementiert sein muss, um Prozessdaten von einer jeweils unterschiedlichen Datenbereitstellungskomponente abrufen zu können. Angesichts mannigfaltiger Varianten von Datenbereitstellungskomponenten - z.B. relationale, objektorientierte, objektrelationale Datenbanken oder auch in Form komponenteninterner Speicherung von Prozessdaten mit einer proprietären Abfrageschnittstelleist eine einheitliche Datenabfrage über verschiedene Datenbereitstellungskomponenten hinweg schwierig bis unmöglich.

Die GB 2 354 848 A offenbart ein Verfahren zur Übermittlung von Nachrichten mittels Publish-Subscribe-Messaging.

Die WO 2018/033293 A1 offenbart ein Verfahren zur dynamischen Assoziation von Clients in einem Publish-Subscribe-Dienst.

Die vorliegende Erfindung ist demgegenüber vor die Aufgabe gestellt, ein Verfahren zu schaffen, welches einen ereignisgesteuerten Abruf von Prozessdaten in einer Vielzahl von Datenbereitstellungskomponenten unabhängig von deren Abfrageschnittstelle ermöglicht.

Die Aufgabe wird durch ein Verfahren mit den Merkmalen des Patentanspruchs 1 gelöst.

Das erfindungsgemäße Verfahren sieht einen ereignisgesteuerten Abruf von Prozessdaten vor, welche für einen Austausch von Nachrichten mit einem für einen Publikations- / Abonnementsdienst - in der Fachwelt auch als Publish/Subscribe Service bekannt - unter Beteiligung eines Nachrichtenmaklers eingerichtet ist. Ein solcher Nachrichtenmakler leitet eine mit einem Topic bzw. assoziierenden Betreff publizierte Nachricht - z.B. Anfrage- oder Antwortnachrichten - an mindestens eine auf diesen assoziierenden Betreff abonnierte Komponente weiter. Das Verfahren umfasst die folgenden Verfahrensschritte:
a) in einer Datenabrufkomponente erfolgt eine Erzeugung einer enthaltenden Anfragenachricht bzw. »Query«, welche neben einer Anfragesyntax einen assoziierenden Betreff enthält. Die Anfragenachricht wird an den Nachrichtenmakler übertragen und von diesem publiziert.
b) Auf Seiten der Datenabrufkomponente erfolgt eine Einrichtung eines Abonnements auf Antwortnachrichten bzw. »Retrieve«-Nachrichten, welche den identischen assoziierenden Betreff der Anfragenachricht enthalten. Dieses Abonnement wird entweder explizit eingerichtet, oder kann aufgrund der zuvor gesendeten Anfragenachricht automatisch durch den Publikations- / Abonnementdienst eingerichtet worden sein.
c) Mindestens eine Datenbereitstellungskomponente empfängt eine mit dem assoziierenden Betreff publizierte Anfragenachricht. Nach einer optionalen Prüfung, ob diese Anfragenachricht von der Datenbereitstellungskomponente auflösbar - d.h. von der Datenbereitstellungskomponente bearbeitbar und beantwortbar ist - erfolgt eine Einrichtung eines Publikations- / Abonnementdienst auf Nachrichten, welche den assoziierenden Betreff der Anfragenachricht enthalten. Ist die Anfragenachricht von einer Datenbereitstellungskomponente dagegen nicht auflösbar, erfolgt optional keine weitere Aktion durch die Datenbereitstellungskomponente.
d) Auf eine seitens der Datenbereitstellungskomponente empfangene und auflösbare Anfragenachricht erfolgt nun eine Bearbeitung der Anfrage, welche eine Bereitstellung von durch die Anfragenachricht angeforderten Daten seitens der Datenbereitstellungskomponente umfasst. Anschließend wird einer Antwortnachricht bzw. »Retrieve«-Nachricht erzeugt, welche die bereitgestellten Daten enthält. Der Antwortnachricht wird mit demselben assoziierenden Betreff versehen, welcher für die Anfragenachricht verwendet wurde. Anschließend erfolgt eine Übertragung der Antwortnachricht an den Nachrichtenmakler sowie eine Publikation der Anfragenachricht durch den Nachrichtenmakler.

Die Erfindung löst die gestellte Aufgabe, einen Abruf von Prozessdaten ereignisgesteuert zu gestalten unter Nutzung der Vorteile des Publikations- / Abonnementsdiensts, welcher im Fall einer definierbaren Änderung eine Datenbereitstellung auslöst, ohne dass die Datenabrufkomponente diese initiieren muss. Die Datenabrufkomponente verbleibt nach Absetzen einer Anfragenachricht bereit für einen Empfang beliebig viele Antwortnachrichten. Diese können von Datenbereitstellungskomponente zu beliebigen Zeitpunkten oder auch nicht gesendet werden. Datenbereitstellungskomponenten können nach Belieben hinzugefügt, ersetzt oder entfernt werden, ohne dass der erfindungsgemäße Abruf von Prozessdaten strukturell zu ändern wäre. In vorteilhafter Weise ermöglicht es das erfindungsgemäße Verfahren somit, eine ereignisgesteuerte dynamische Datenabfrage zu realisieren, bei der neue Antwortnachrichten immer dann gesendet werden, wenn sich Änderungen in den bereitgestellten oder gespeicherten Prozessdaten ergeben. Systemtechnisch wird so ein verteilter, stehender Anfragekanal realisiert.

Die Erfindung löst die gestellte Aufgabe, einen Abruf von Prozessdaten in einer Vielzahl von Datenbereitstellungskomponenten zu bewerkstelligen, unter Nutzung der Vorteile des Publikations- / Abonnementsdiensts, welcher eine Abkehr von vormals notwendigen Einzelabfragen durch die Datenabrufkomponente hin zu einem vorteilhaften Abonnement durch die Datenabrufkomponente gewährleistet. Für den erfindungsgemäßen Abruf kann durch eine einzige Anfragenachricht ein Abruf einer Vielzahl von verteilt vorgehaltenen Prozessdaten erfolgen.

Die Erfindung löst die gestellte Aufgabe, einen Abruf von Prozessdaten in einer Vielzahl von Datenbereitstellungskomponenten unabhängig von deren Abfrageschnittstelle zu ermöglichen dadurch, dass der Datenabruf durch eine Anfragenachricht erfolgt, in welcher die Anfrage auf reiner Datenebene gestaltet ist. Eine Datenabrufkomponente benötigt weder Details über die Anfragemodalitäten der Datenbereitstellungskomponenten noch Kenntnis oder direkte Verweise auf aktuell verfügbare Datenbereitstellungskomponenten. Ein einheitlicher Abruf von Prozessdaten über verschiedene Datenbereitstellungskomponenten hinweg wird durch das einheitliche Format der Anfragenachricht und der Antwortnachricht dadurch gewährleistet, indem die Datenbereitstellungskomponenten die Umsetzung der einheitlichen Anfrage in interne Datenbankanfragesprachen und Datenbankschemata vornehmen.

Weitere Ausgestaltungen der Erfindung sind Gegenstand der abhängigen Patentansprüche.

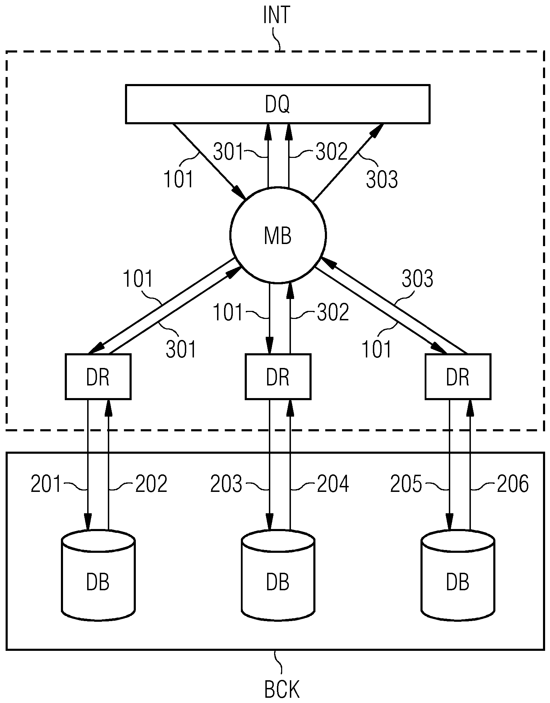

Im Folgenden werden weitere Ausführungsbeispiele und Vorteile der Erfindung anhand der Zeichnung näher erläutert. Dabei zeigt die einzige Figur ein schematisches Diagramm zur Darstellung eines das erfindungsgemäße Verfahren begleitenden Austauschs von Nachrichten zwischen erfindungsgemäß arbeitenden Komponenten.

Die FIG zeigt eine Integrationsschicht INT, in der mehrere Funktionskomponenten MB,DQ,DR in drahtloser und/oder drahtgebundener Weise kommunizieren. Die mit einem gestrichelten Kasten dargestellte Integrationsschicht INT ist in einer lediglich der Beschreibung dienenden - ansonsten für die Erfindung unwesentlichen - Abgrenzung zu einer mit einem mit durchgezogener Linie gezeichneten Kasten dargestellten Backend-Schicht BCK zu sehen, welche vornehmlich aus Prozessdatenspeicher DB zur dezentralen Datenhaltung und Datenverarbeitung, etwa im Sinne eines Cloud Computing, besteht.

Innerhalb der Integrationsschicht INT ist eine Datenabrufkomponente DQ mit einem Nachrichtenmakler MB zumindest zeitweilig kommunikativ verbunden. Weiterhin sind mindestens eine - in der Zeichnung drei - Datenbereitstellungskomponenten DR zumindest zeitweilig mit dem Nachrichtenmakler MB kommunikativ verbunden.

Der Nachrichtenmakler MB dient als Vermittler von zwischen der Datenabrufkomponente DQ und den Datenbereitstellungskomponenten DR ausgetauschten Nachrichten, wobei auch - zeichnerisch nicht dargestellte - Funktionskomponenten umfasst sind, welche eine Mischform bilden, also beispielsweise sowohl als Datenbereitstellungskomponenten DR als auch als Datenabrufkomponente DQ agieren.

Im Nachrichtenmakler MB oder optional auch in der Datenabrufkomponente DQ und den Datenbereitstellungskomponenten DR ist ein ereignisgesteuerter Publikations-/Abonnementdienst bzw. Publish/Subscribe Service eingerichtet, gemäß dem eine Nachrichtenverteilung von einer publizierenden Komponente
- Publisher - an einen oder mehrere abonnierende Komponenten
- Subscribers - erfolgt. Eine Publikation oder ein Abonnement von Nachrichten erfolgt anhand eines assoziierenden Betreffs bzw. Topic. Unter Angabe eines assoziierenden Betreffs teilt ein abonnierender Client mit, an welchen Nachrichten Interesse besteht bzw. welcher assoziierende Betreff abonniert wird. In der einfachsten Betriebsart muss der Nachrichtenmakler beim Erhalt eines Betreffs von einer publizierenden Komponente lediglich prüfen, ob es für den jeweiligen Betreff einen Abonnenten gibt. Falls ja, werden die Daten an den oder die Abonnenten weitergeleitet, andernfalls verworfen.

Der Publikations- / Abonnementdienst wird vorzugweise über das MQTT-Protokoll (Message Queuing Telemetry Transport) oder einer Variante davon bereitgestellt. MQTT ist ein ereignisgesteuertes Publish-Subscribe-Protokoll für einen Nachrichtenaustausch zwischen Geräten. Das Protokoll MQTT ist datenagnostisch, also nicht auf ein bestimmtes Datenformat festgelegt. Es können sowohl Rohdaten einer einzelnen Messgröße als auch komplexe Datenstrukturen übertragen werden.

Eine Datenübermittlung mittels MQTT gewährleistet eine hohe Zuverlässigkeit, welche insbesondere bei Sensornetzwerken, bei einer Machine-to-Machine-Kommunikation (M2M sowie beim »Internet der Dinge«) zum Einsatz kommt. Beim »Internet der Dinge« oder auch IoT (Internet of Things) sind die beteiligten kommunizierenden Geräte üblicherweise stets online und kommunizieren laufend untereinander.

Gemäß alternativen Ausgestaltungen der Erfindung wird der Publikations- / Abonnementdienst über das DDS-Protokoll (Data Distribution Service) oder über das WAMP (Web Application Messaging Protocol) bzw. über einer Variante oder Weiterbildung dieser Protokolle bereitgestellt.

In der vorliegenden Ausgestaltung sind die einzelnen Komponenten DQ,DR mit dem zentralen Nachrichtenmakler MB unter Anwendung des MQTT-Protokolls verbunden, wobei der Nachrichtenmakler MB als Informationsvermittler zwischen der Datenabrufkomponente DQ und den Datenbereitstellungskomponenten DR dient. Eine Komponente DQ,DR kann bestimmte Informationen über spezielle Nachrichtenkanäle publizieren oder abonnieren. Die einzelnen Nachrichtenkanäle werden über den assoziierenden Betreff bzw. Topic bezeichnet, wobei die Nachrichtenkanäle baumförmig organisiert sein können, entsprechend einer Mehrzahl an strukturierten Betreff-Einträgen.

Im Folgenden wird das erfindungsgemäße Verfahren mit Darstellung eines Austauschs von Nachrichten zwischen den Komponenten DQ,DR und dem zentralen Nachrichtenmakler MB anhand der Zeichnung erläutert.

In einer Datenabrufkomponente DQ wird eine Anforderung zum Abruf von Prozessdaten generiert, auf die eine Erzeugung einer Anfragenachricht 101 bzw. »Query« erfolgt. Die Anfragenachricht 101 wird an den Nachrichtenmakler Kler MB zugestellte Anfragenachricht 101 wird unter Anwendung des Publikations- / Abonnementsdiensts publiziert. In der Zeichnung ist diese Publikation durch eine vom Nachrichtenmakler MB an mindestens eine - oder, wie zeichnerische dargestellt, vorzugsweise alle - Datenbereitstellungskomponente DR weitergeleitete Anfragenachricht 101 dargestellt.

Die Anfragesyntax der Anfragenachricht 101, welche die erwarteten Daten der Anfrage spezifiziert, ist in einer datenbankagnostischen Weise formuliert, beispielsweise in der Form:

```
 QUERY (Message Token)
 {
     objectType: CuttingTool,
     filterConditions:
     {
     and:
     [
       [remainingToolLife, filterOp.lessThan(42)],
       [toolType, filterOp.equals(Vollbohrer)],
       [associatedMachine, filterOp.equals(Heller 01)],
     ]
 },
 take: 77,
 orderBy: [[remainingToolLife, asc], [name, asc]]
 }
```

Die dargestellte Anfragenachricht 101 wird über den beispielhaften assoziierenden Betreff »Message Token« eindeutig identifiziert. Diese Zeichenkette »Message Token« wird für eine Zuordnung späterer Antwortnachrichten zu dieser Anfragenachricht 101 verwendet.

Die obige beispielhafte Anfragesyntax ruft die ersten 77 Objektdatensätze zu Objekten vom Typ Schneidwerkzeug bzw. »CuttingTool« ab, welche Vollbohrer sind, eine Reststandzeit bzw. »remainingToolLife« von weniger als 42 Minuten - hier dimensionslos spezifiziert - haben und der über das Argument der Suchanweisung- »associatedMachine« - der CNC-Maschine »Heller 01« zugeordnet sind. Die Ergebnisse sollen mit der Anweisung
orderBy: [[remainingToolLife, asc], [name, asc]]
aufsteigend nach Reststandzeit und Name des Schneidwerkzeugs geordnet zurückgeliefert werden.

In einem weiteren Schritt wird im Publikations- / Abonnementdienst ein Abonnement auf Antwortnachrichten eingerichtet, welche den gleichen assoziierenden Betreff - hier »Message Token« - der Anfragenachricht 101 enthalten. Das Abonnement wird entweder durch die Datenabrufkomponente DQ oder durch den Nachrichtenmakler MB eingerichtet.

Im Ausführungsbeispiel wird ein Abonnement für einen Empfang von Antwortnachrichten vom MQTT-Typ »RETRIEVE« eingerichtet, welche den assoziierenden Betreff »Message Token« enthalten. Das Abonnement wird entweder explizit, d.h. durch eine spezifische Anforderung an den Publikations- / Abonnementdienst eingerichtet, es kann aufgrund der zuvor gesendeten Anfragenachricht 101 jedoch auch implizit bzw. automatisch durch den Publikations- / Abonnementdienst eingerichtet werden.

Alle Datenbereitstellungskomponenten DR erhalten diese Anfragenachricht 101 über den Nachrichtenmakler MB zugestellt. Um eine Zustellung der Anfragenachrichten an Datenbereitstellungskomponenten DR zu gewährleisten, wurde zuvor seitens des Nachrichtenmaklers MB oder seitens der Datenbereitstellungskomponenten DR beispielsweise ein generisches Abonnement - d.h. ein Abonnement auf Anfragenachrichten mit beliebigen assoziierendem Betreff - eingerichtet.

Nach Empfang der Anfragenachricht 101 durch eine Datenbereitstellungskomponenten DR prüft diese, ob die mit der Anfragenachricht 101 übermittelte Anfrage »aufgelöst« - d.h. von der Datenbereitstellungskomponente DR bearbeitbar und beantwortbar ist - werden kann. Eine derartige Prüfung beinhaltet eine Suche in Prozessdatenspeicher DB - welche je nach Ausführung als nicht-flüchtige oder flüchtige Speicher in Rechnersystemen, als systeminterne Datenbanken oder systemextern zugreifbare Datenbanken ausgestaltet sind- nach passenden Resultaten zur Anfrage. Beispielsweise wird zuerst der Objekttyp der Anfrage, im obigen Beispiel »Schneidwerkzeug«, überprüft.

Hält eine - einen oder mehrere Prozessdatenspeicher DB verwaltende - Datenbereitstellungskomponenten DR keine Daten zu diesem Objekttyp vor, wird keine Antwortnachricht generiert. Ansonsten übersetzt die Datenbereitstellungskomponenten DR die in einer generischen - insbesondere datenbankagnostische - Anfragesyntax gestellte Anfrage der Anfragenachricht 101 in eine jeweilige datenbankspezifische Datenbankanfrage 201,203,205 unter Einsatz des spezifischen Datenbankschemas und führt diese aus. Beispielsweise ist eine erste datenbankspezifische Datenbankanfrage 201 in SQL (Structured Query Language) zur Anfrage einer relationalen Datenbank gestaltet.

Die Interpretation und Bearbeitung der Anfragesyntax erfolgt asynchron und unabhängig auf jeder einzelnen Datenbereitstellungskomponenten DR in Zusammenarbeit mit einem oder mehreren dieser zugeordneten Prozessdatenspeicher DB.

Die erfindungsgemäß eingesetzten Datenbereitstellungskomponenten DR sind nicht auf Backend-Systeme zum Cloud Computing bzw. Edge Computing oder persistierende Systeme begrenzt. Das Verfahren ist auf beliebige Varianten von Datenbereitstellungskomponenten DR bzw. Prozessdatenspeicher DB erweiterbar. So können beispielsweise spezifische Laufzeitdaten oder auch In-Memory-Daten aus Prozessgeräten abgefragt werden. Weiterhin können Sensormessungen spezifisch verteilt angesteuert und deren Messdaten zurückgeliefert werden.

Der erfindungsgemäße Abruf von Prozessdaten ermöglicht mit anderen Worten nicht nur das klassische »Retrieval« von datenspeichernden Komponenten, insbesondere Datenbanksystemen, sondern allgemein den Abruf von Datenbereitstellungskomponenten DR, die ihre Prozessdaten z.B. auch dynamisch in Echtzeit generieren können. Unabhängig vom Typ der Datenbereitstellungskomponenten DR kann in vorteilhafter Weise das gleiche Abrufverfahren verwendet werden.

Das erfindungsgemäße Verfahren ermöglicht somit einen transparenten Einsatz beliebiger Datenbereitstellungskomponenten DR im Zusammenspiel mit beliebig zugeordneten Prozessdatenspeicher DB. Beispielsweise erfolgt ein Datenabruf von einem Sensor als Datenbereitstellungskomponente DR - bezüglich des Abrufverfahrens und bezüglich ausgetauschter Nachrichten - in identischer Weise wie ein Datenabruf von einer komplexen Cloud-Datenbank.

Ein jeweiliges vom Prozessdatenspeicher DB an dessen Datenbereitstellungskomponente DR zurückgegebenes Suchresultat 202, 204, 206 wird von der entsprechenden Datenbereitstellungskomponenten DR bearbeitet und in einer Antwortnachricht 301, 302, 303 mit einem MQTT-Typ »RETRIEVE« über den Publikations-/ Abonnementdienst publiziert, welche aufgrund des assoziierenden Betreffs »Message Token« über den Nachrichtenmakler MB an die Datenabrufkomponente DQ vermittelt wird. Im Inhalt der Antwortnachrichten 301, 302, 303 werden die Objektdaten zum angefragten Objekttyp übermittelt. Die Objektdaten setzen sich hierbei, wie im Folgenden gezeigt, aus den in der Datenbank intern gespeicherten Daten zusammen, die in eine einheitliche Objektnotation umgewandelt werden. Eine Antwortnachricht 301 hat beispielsweise folgende Syntax:

```
 RETRIEVE (Message Token)
 [
     {
          objectId: da44c4a6-e8a3-4fdd-86fb-8f3eb477dcc4
          objectType: CuttingTool,
          name: B20HSK63001,
          toolType: Vollbohrer,
          remainingToolLife: 10,
          associatedMachine: Heller 01,
          ...
     },
 {
          objectId: cbce409b-b865-4fdl-9138-805af8036487
          objectType: CuttingTool,
          name: B20HSK63003,
          toolType: Vollbohrer,
          remainingToolLife: 10,
          associatedMachine: Heller 01,
    ...
 },
 ...
```

Die obige beispielhafte Antwortnachricht 301 übermittelt der Anfragenachricht 101 entsprechend mehrere Objektdatensätze - aus Übersichtsgründen sind oben lediglich zwei Objektdatensätze dargestellt - zu Objekten vom Typ Schneidwerkzeug bzw. »CuttingTool« ab, welche Vollbohrer sind, eine Reststandzeit bzw. »remainingToolLife« von weniger als 42 Minuten - hier 10 Minuten - haben und der über das Argument der Suchanweisung- »associatedMachine« - der CNC-Maschine »Heller 01« zugeordnet sind. Die Ergebnisse werden entsprechend den Anforderungen Anfragenachricht 101 aufsteigend nach Reststandzeit und Name des Schneidwerkzeugs geordnet zurückgeliefert. Allgemein formuliert ist die Anfragesyntax der Anfragenachricht 101 strukturbildend für die Bereitstellung der Prozessdaten in der Antwortnachricht 301.

Die dargestellte Antwortnachricht 301 verwendet wie die zugehörige Anfragenachricht 101 den assoziierenden Betreff »Message Token« zur Zuordnung der Antwortnachricht 301 zur Anfragenachricht 101.

Im Folgenden werden einige Vorteile des erfindungsgemäßen Verfahrens gegenüber den bislang eingesetzten Client-Server-basierten Verfahren zum statischen Abruf getrennt gehaltener Daten gegenübergestellt.

Während im Stand der Technik bekannte Client-Server-basierte Verfahren zum statischen Abruf getrennt gehaltener Daten eine spezifische Anfrage seitens eines datenabrufenden Client an mehrere einzelne datenbereitstellende Server erforderlich machte, erfolgt der erfindungsgemäße Abruf von Prozessdaten dezentral, verteilt, und rein auf Datenebene. Seitens der Datenabrufkomponente DQ ist keinerlei Wissen über die im System aktuell verfügbaren Datenbereitstellungskomponenten DR erforderlich. Diese können nach Belieben in das System hinzugefügt oder aus dem System entfernt werden. Getrennte und unkoordinierte Objektdaten aus verschiedenen Backend-Systemen BCK können dynamisch zusammengeführt werden, ohne internes Wissen über die Backend-Systeme BCK haben zu müssen.

Während bei bekannten Client-Server-basierte Verfahren zum statischen Abruf getrennt gehaltener Daten mehrere einzelne Datenabfragen erforderlich waren, welche immer nur von der direkt adressierten datenbereitstellenden Komponente bearbeitet und mit maximal einer Antwort abgeschlossen wurden, erfordert der erfindungsgemäße Abruf von Prozessdaten lediglich eine einzelne Abfrage zum Abruf getrennt gehaltener Daten von unterschiedlichen Datenbereitstellungskomponenten DR. Dabei liegt es in vorteilhafter Weise alleine in der Verantwortung der Datenabrufkomponente DQ, wie lange diese auf Antwortnachrichten warten (z.B. per Timeout) bzw. wie viele Antwortnachrichten diese zu erwarten hat. Die Datenabrufkomponente DQ bleibt nach Absetzen einer Anfragenachricht grundsätzlich empfangsbereit für beliebig viele Antwortnachrichten. Diese können von Datenbereitstellungskomponenten DR zu jedem beliebigen Zeitpunkt oder auch gar nicht gesendet werden. Damit kann eine ereignisgesteuerte dynamische Datenabfrage realisiert werden, bei der neue Antwortnachrichten immer dann verschickt werden, wenn sich Änderungen in den bereitgestellten bzw. gespeicherten Daten ergeben. Systemtechnisch wird so ein verteilter, stehender Anfragekanal realisiert. Der erfindungsgemäße Abruf von Prozessdaten wird nicht an spezifische Komponenten direkt adressiert, sondern richtet sich an alle verfügbaren Komponenten, welche ein entsprechendes Abonnement eingerichtet haben.

Gemäß den bekannten Client-Server-basierten Verfahren zum statischen Abruf getrennt gehaltener Daten musste auf dem datenabrufenden Client eine spezifische Abfrageschnittstelle eines jeweiligen datenbereitstellenden Servers implementiert sein, um Daten von dort abrufen zu können. Unterschiedliche datenbereitstellende Server verwendeten meist unterschiedliche Abfrageschnittstellen (z.B. HTTP basierte REST APIs), was eine einheitliche Datenabfrage über verschiedene datenbereitstellende Server hinweg schwierig bis unmöglich gestaltete. Insbesondere musste für jedes gewünschte Datenfragment ein zugehöriger datenbereitstellender Server im Voraus bekannt sein. Eine allgemeine Abfrage bezüglich eines Datenfragments war nicht möglich. Demgegenüber ermöglicht der erfindungsgemäße Abruf von Prozessdaten eine einheitliche Datenabfrage über verschiedene Datenbereitstellungskomponenten DR hinweg. Unterstützt durch ein einheitliches Format von Anfrage- und Antwortnachrichten erfolgt die Umsetzung - in interne Datenbankanfragesprachen und Datenbankschemata - und Bearbeitung der Anfragenachricht stattdessen in der Datenbereitstellungskomponenten DR und nicht in der Datenabrufkomponente DQ, was eine einheitliche Datenabfrage über verschiedene Datenbereitstellungskomponenten DR hinweg ohne Zusatzaufwand ermöglicht. Der erfindungsgemäße Abruf von Prozessdaten ermöglicht eine einfache Integration in heterogene Edge / Cloud Umgebungen mit unterschiedlichen Datenbanksystemen.

## Patentansprüche

1. Verfahren zum ereignisgesteuerten Abruf von Prozessdaten, unter Verwendung eines für einen Publikations- / Abonnementdienst eingerichteten Nachrichtenmaklers (MB), das Verfahren umfassend folgende Schritte:
a) in einer Datenabrufkomponente (DQ), Erzeugung einer einen assoziierenden Betreff enthaltenden Anfragenachricht (101), Übertragung der Anfragenachricht (101) an den Nachrichtenmakler (MB) und Publikation der Anfragenachricht (101) durch den Nachrichtenmakler (MB);
b) in der Datenabrufkomponente (DQ) und/oder in dem Nachrichtenmakler (MB), Einrichtung eines Abonnements auf von einer Datenbereitstellungskomponente (DR) zu empfangenden Antwortnachrichten, welche den assoziierenden Betreff der Anfragenachricht enthalten;
c) in der Datenbereitstellungskomponente (DR), Empfang der mit dem assoziierenden Betreff publizierten Anfragenachricht und Einrichtung eines Publikations- / Abonnementdienstes von Nachrichten, welche den assoziierenden Betreff der Anfragenachricht enthalten;
d) in der Datenbereitstellungskomponente (DR), Bereitstellung von durch die Anfragenachricht angeforderter Prozessdaten, Erzeugung einer diese Prozessdaten und den assoziierenden Betreff der Anfragenachricht enthaltenden Antwortnachricht, Übertragung der Antwortnachricht an den Nachrichtenmakler (MB); und Vermittlung einer über den Publikations- / Abonnementdienst publizierten Antwortnachricht über den Nachrichtenmakler (MB) an die Datenabrufkomponente (DQ) .

2. Verfahren nach Patentanspruch 1, **dadurch gekennzeichnet, dass** eine in der Anfragenachricht enthaltene Anfragesyntax in datenbankagnostischer Weise formuliert ist.

3. Verfahren nach Patentanspruch 2, **dadurch gekennzeichnet, dass** die Anfragesyntax der Anfragenachricht strukturbildend für die Bereitstellung der Prozessdaten in der Antwortnachricht ist.

4. Verfahren nach einem der vorgenannten Patentansprüche, **dadurch gekennzeichnet, dass** der Publikations- / Abonnementdienst unter Verwendung eines Message Queuing Telemetry Transport-Protokolls, MQTT, implementiert ist.

5. Verfahren nach einem der vorgenannten Patentansprüche 1 bis 3, **dadurch gekennzeichnet, dass** der Publikations- / Abonnementdienst unter Verwendung eines Data Distribution Service-Protokolls , DDS, implementiert ist.

6. Verfahren nach einem der vorgenannten Patentansprüche 1 bis 3, **dadurch gekennzeichnet, dass** der Publikations- / Abonnementdienst unter Verwendung eines Web Application Messaging Protocol, WAMP, implementiert ist.

7. Verfahren nach einem der vorgenannten Patentansprüche, **dadurch gekennzeichnet, dass** die Prozessdaten seitens der Datenbereitstellungskomponente (DR) von einem Prozessdatenspeicher (DB) abgefragt werden.

8. Verfahren nach Patentanspruch 7, **dadurch gekennzeichnet, dass** der Prozessdatenspeicher DB als
- nicht-flüchtiger Speicher in Rechnersystemen;
- flüchtiger Speicher in Rechnersystemen;
- rechnersystem-interne Datenbank;
- rechnersystem-externe Datenbank; und/oder;
- extern zugreifbare Datenbank;
ausgestaltet ist.

## Claims

1. Method for the event-controlled retrieval of process data, by using a message broker (MB) set up for a publication/subscription service, said method comprising the following steps:
a) a data retrieval component (DQ) generating a request message (101) that contains an associating subject and transmitting the request message (101) to the message broker (MB), and the request message (101) being published by the message broker (MB);
b) the data retrieval component (DQ) and/or the message broker (MB) setting up a subscription for response messages to be received from a data provision component (DR) that contain the associating subject of the request message;
c) the data provision component (DR) receiving the request message published with the associating subject and setting up a publication/subscription service for messages that contain the associating subject of the request message;
d) the data provision component (DR) providing process data requested by the request message, generating a response message containing these process data and the associating subject of the request message, transmitting the response message to the message broker (MB); and conveying a response message published using the publication/subscription service to the data retrieval component (DQ) via the message broker (MB).

2. Method according to Patent Claim 1, **characterized in that** a query syntax contained in the request message is formulated in a database-agnostic manner.

3. Method according to Patent Claim 2, **characterized in that** the query syntax of the request message is structure-forming for the provision of the process data in the response message.

4. Method according to one of the preceding patent claims, **characterized in that** the publication/subscription service is implemented by using a message queueing telemetry transport protocol, MQTT.

5. Method according to one of preceding Patent Claims 1 to 3, **characterized in that** the publication/subscription service is implemented by using a data distribution service protocol, DDS.

6. Method according to one of preceding Patent Claims 1 to 3, **characterized in that** the publication/subscription service is implemented by using a web application messaging protocol, WAMP.

7. Method according to one of the preceding patent claims, **characterized in that** the process data are requested from a process data memory (DB) by the data provision component (DR).

8. Method according to Patent Claim 7, **characterized in that** the process data memory (DB) is in the form of
- a nonvolatile memory in computer systems;
- a volatile memory in computer systems;
- a computer-system-internal database;
- a computer-system-external database; and/or
- an externally accessible database.

## Revendications

1. Procédé d'interrogation, commandée par événement, de données de processus, au moyen d'un courtier de messages (MB) mis en place pour un service de publication/d'abonnement, le procédé comportant les étapes suivantes :
a) dans un composant d'interrogation de données (DQ), production d'un message de requête contenant un objet associatif (101), transmission du message de requête (101) au courtier de messages (MB) et publication du message de requête (101) au moyen du courtier de messages (MB) ;
b) dans le composant d'interrogation de données (DQ) et/ou dans le courtier de messages (MB), mise en place d'un abonnement à des messages de réponse à recevoir d'un composant de préparation de données (DR), lesquels contiennent l'objet associatif du message de requête ;
c) dans le composant de préparation de données (DR), réception du message de requête publié avec l'objet associatif et mise en place d'un service de publication/d'abonnement de messages qui contiennent l'objet associatif du message de requête ;
d) dans le composant de préparation de données (DR), préparation de données de processus demandées au moyen du message de requête, production d'un message de réponse contenant ces données de processus et l'objet associatif du message de requête, transmission du message de réponse au courtier de messages (MB) ; et communication d'un message de réponse publié par l'intermédiaire du service de publication/d'abonnement par l'intermédiaire du courtier de messages (MB) au composant d'interrogation de données (DQ).

2. Procédé selon la revendication 1, **caractérisé en ce qu'**une syntaxe de requête contenue dans le message de requête est formulée de manière agnostique du point de vue de la banque de données.

3. Procédé selon la revendication 2, **caractérisé en ce que** la syntaxe de requête du message de requête est structurante pour la préparation des données de processus dans le message de réponse.

4. Procédé selon l'une des revendications précédentes, **caractérisé en ce que** le service de publication/d'abonnement est mis en œuvre au moyen d'un protocole de Message Queuing Telemetry Transport, MQTT.

5. Procédé selon l'une des revendications précédentes 1 à 3, **caractérisé en ce que** le service de publication/d'abonnement est mis en œuvre au moyen d'un protocole de Data Distribution Service, DDS.

6. Procédé selon l'une des revendications précédentes 1 à 3, **caractérisé en ce que** le service de publication/d'abonnement est mis en œuvre au moyen d'un protocole de Web Application Messaging, WAMP.

7. Procédé selon l'une des revendications précédentes, **caractérisé en ce que** les données de processus sont consultées du côté du composant de préparation de données (DR) par une mémoire de données de processus (DB).

8. Procédé selon la revendication 7, **caractérisé en ce que** la mémoire de données de processus DB est conçue sous forme
- de mémoire non volatile dans des systèmes informatiques ;
- de mémoire volatile dans des systèmes informatiques ;
- de banque de données interne au système informatique ;
- de banque de données externe au système informatique ; et/ou ;
- de banque de données accessible en externe.
